# EUROPEAN PATENT SPECIFICATION

(11) **EP 3 464 756 B1**
(45) Date of publication and mention of the grant of the patent: **31.03.2021**
(21) Application number: 16904769.3
(22) Date of filing: 08.07.2016
(51) Int. Cl.: E04H 15/20, E04H 15/22, E04H 3/22, E04B 1/32, G03B 21/56

(54) **DOMED SCREEN STRUCTURE WITH ADDITIONAL EXTERNAL PROTECTION**
KUPPELFÖRMIGE SCHIRM-STRUKTUR MIT ZUSÄTZLICHEM ÄUSSEREN SCHUTZ
STRUCTURE ECRAN EN FORME DE DOME AVEC PROTECTION EXTERNE ADDITIONELLE

(30) Priority: 07.06.2016 UA 201606184
(43) Date of publication of application: 10.04.2019
(73) Proprietor: Kutlahmetov, Kostyantyn Vitaliyovich, Kyiv 03067 (UA); Aistov, Georgiy Viktorovich, St.Petersburg 194156 (RU)
(72) Inventor: Kutlahmetov, Kostyantyn Vitaliyovich, Kyiv 03067 (UA); Aistov, Georgiy Viktorovich, St.Petersburg 194156 (RU)
(74) Representative: Jeck, Anton
(86) International application number: PCT/UA2016/000087
(87) International publication number: WO 2017/213616

(56) References cited:
- DE-U1-202009 003 309
- JP-A- 2005 017 398
- JP-U- H0 635 856
- JP-U- S6 035 856
- RU-C1- 2 480 398
- US-B1- 7 791 799
- US-B2- 8 578 657

## Description

The invention relates to the field of construction and may be used to design quick-mounting structures that are temporary (mobile) and suitable for quick dismantling, intended for various purposes, preferably, entertainment, such as cinemas, planetariums or buildings for other public events: exhibitions, concerts, workshops and the like.

Many similar structures, considered the closest prior art, are known to the applicant including the following.

A prior art discloses an inflatable building structure with a fully self-supporting design in the inflated state which is preferably used as a greenhouse. The said inflated self-supporting design forms a hemispherical dome with double walls made of a transparent or semi-transparent material. Further, the said design comprises a doorway to connect the inner cavity of the design with outer space and a ring in the bottom part around the perimeter of the hemispherical dome which is filled with water to provide stability to the design (US Patent 6 061969 A published on 15 June 2000).

A prior art discloses an inflatable building structure disclosed in Application US 2008 313969 A1 published on 25 December 2008 which design is formed by using two cavities with different pressure. When filled with fluid medium under pressure above atmospheric pressure, the first cavity forms an inflatable frame (a supporting structure), in particular, in the form of a geodesic dome. The said design comprises a flexible screen positioned below the first cavity and attached thereto. The second cavity is formed between the frame and the screen by removing fluid medium from the cavity (to achieve rarefaction in the cavity) to shape a flexible screen so that it becomes suitable for projecting images on its inner surface and by supporting it by providing the required pressure value below atmospheric pressure.

A prior art discloses a quick-mounting dome-shaped structure equipped with a hemispherical flexible screen, the inner surface of which is used for image projection, and external film coating positioned to form a cavity between the screen and this coating. Rarefaction is created in the cavity (pressure below atmospheric pressure) with a pump positioned in the lower part of the building to form the screen surface inverted in the middle and the outer dome surface which shape is determined by the hemispherical frame. Lower parts of the screen and external film coating are attached to the respective part of the hemispherical frame along their diameter (Application JP 2005 017398 A published on 20 January 2005).

A prior art discloses, preferably, a dome-shaped image projection system which comprises a hemispherical frame in the form of a geodesic dome or another required shape (pyramid, cube, etc.) positioned between two membranes - the upper and the lower to form two cavities separated by the lower membrane. The inner cavity has a hemispherical shape formed by removing air from the upper cavity with fans positioned at the zenith of the dome and around the perimeter and is designed to project an image on the inner surface of the lower membrane from the central point of the hemispherical form. The frame can be formed with metal rods, the ends of which are interconnected to form adjacent polygons. The system further comprises a fan in the inner cavity to give a hemispherical shape to the lower membrane before air is removed from the upper cavity. Further, the frame is coupled with inner surfaces of both membranes in certain points positioned evenly on the inner surface of membranes. Both membranes are interconnected with a circular pipe positioned in the middle of a hemispherical shape along its parallel (Patent US 7 791 799 B1 published on 07 September 2010).

A prior art discloses a quick-mounting dome-shaped structure comprising at least two preferably hemispherical flexible shells of a larger area and a smaller area, positioned one inside the other, respectively, and interconnected at the bottom around the circumference of the hemisphere to form a cavity wherein a frame that follows the shape of the shell of a larger area is positioned, and gas rarefaction is created in the said cavity by a rarefaction means with a suction opening coupled with the said cavity, and the surface of the shell of a larger area under rarefaction is tightly coupled with the outer surface of the frame, and the surface of the shell of a smaller area under rarefaction is positioned at a distance from the inner surface of the frame to limit the said cavity by surfaces of shells of a larger area and a smaller area (Patent RU 2490398 C1 published on 20 August 2013).

The disadvantage of similar structures, including the prototype, is, firstly, lack of external protection elements for the entire surface area of the upper shell (membrane, film) to protect from exposure to the environment, in particular, atmospheric precipitation, wind, etc., foreign elements that could fall onto the surface of the upper shell, secondly, lack of means to give any shape to the outer surface that is important for temporary structures intended for entertainment events, and, thirdly, protection of the inner cavity, limited by the screen, from exposure to daylight that prevents image projection provided only by making the screen from a light reflective material imposes quite significant requirements to the screen, the material it is made of, and the method it is attached to the frame or the upper shell.

DE 20 2009 003309U1, discloses a domed screen structure with additional external protection comprising at least two preferably hemispherical flexible shells: the shell of a larger area and a screen with a light-reflecting layer that used as the shell of a smaller area, positioned one inside the other, respectively, and interconnected at the bottom around the circumference of the hemisphere to form a cavity.

The object of the invention is to improve the design of the quick-mounting structure by providing an opportunity to design the outer surface of the structure of any shape and to provide additional protection for internal elements of the structure and, at the same time, to simplify achieving the above advantages by adding a minimum number of new elements to the design, using for this purpose structural elements already known in the prior art and coupling them with the elements added to achieve the object of the invention. An additional object is to improve stability of the structure and the speed of its construction.

This object is resolved by proposing a domed screen structure with additional external protection according to appended claim 1, so that a quick-mounting structure comprising at least two, preferably, hemispherical flexible shells of a larger area and a smaller area, positioned one inside the other, respectively, and interconnected at the bottom around the circumference of the hemisphere wherein the frame following the shape of the shell with a larger area is positioned, and gas rarefaction is created in the said cavity using a rarefaction means with a suction opening coupled with the said cavity, and the surface of the shell of a larger area under rarefaction is tightly coupled with the outer surface of the frame, and the surface of the shell of a smaller area under rarefaction is positioned at a distance from the inner surface of the frame to limit the said cavity by surfaces of shells of a larger area and a smaller area, according to the invention, further comprises a flexible outer shell positioned on top of the said shell of a larger area and connected to it at the bottom around the circumference of the hemisphere to form an additional cavity limited by the outer surface of the shell of a larger area and the inner surface of the outer shell, and gas overpressure above atmospheric pressure is created inside the additional cavity by the said rarefaction means with an outlet opening coupled with the inner space of the additional cavity, and the difference between overpressure value in the additional cavity and gas rarefaction value in the cavity between shells of a larger area and a smaller area does not exceed 20%.

According to the invention, the structure may further comprise a means of gas supply to the additional cavity and/or a means withdrawing gas from the additional cavity.

According to the invention, the structure comprises a synchronisation means to create gas rarefaction in the said cavity and to create overpressure in the additional cavity coupled with the rarefaction means and the means for gas supply to the additional cavity and/or the means for gas withdrawal from the additional cavity.

Further according to the invention, the said synchronisation means comprise a power control means for the rarefaction means and the means for gas supply to the additional cavity and/or the means for gas withdrawal from the additional cavity.

For the said embodiments of the invention, air is preferably used as gas.

For the said embodiment of the invention, air rarefaction of at least 250 Pa may be created in the cavity between shells of a larger area and a smaller area.

According to yet another embodiment of the invention, a geodesic frame which surface area is formed by areas of polygonal contours adjacent to each other and which comprises a lower edge along the diameter of the hemisphere may be used as a frame.

In the said embodiment of the invention, the geodesic frame may be formed by rods interconnected by connecting elements to form an aggregate of polygonal contours adjacent to each other.

Further, in the said embodiment of the invention, the geodesic frame may comprise a ring element positioned concentrically to a bottom edge of the frame around its perimeter. In this case, the lower part of the shell of a smaller area is wrapped around the ring element and is attached to the lower part of the shell of a larger area with a detachable connection. Alternatively, the lower part of the shell of a larger area is wrapped around the ring element and is attached to the lower part of the shell of a smaller area with a detachable connection.

Yet another embodiment of connection of shells of a larger and a smaller area with the geodesic frame is described below. The lower edge of the geodesic frame is designed as a preferably rectangular cross-section ring element to form the outer and inner lateral surfaces of the ring element, and the outer lateral surface of the ring element is connected by a detachable connection with the lower part of the shell of a larger area, and the inner lateral surface the ring element is connected by a detachable connection with the lower part of the shell of a smaller area.

In any of the said embodiments of the invention, the outer shell may be attached to the shell of a larger area by a detachable connection.

In yet another embodiment of the invention, a screen with a light-reflecting layer may be used as the shell of a smaller area.

In yet another embodiment of the invention, a pump may be used as a rarefaction means.

In the said embodiment of the invention, a pump outlet opening may be positioned at a height within 1 ... 1.5 m from the lower edge of the geodesic frame.

In yet another embodiment of the invention, an outer shell is made of polyurethane coated polyester or polyvinylchloride with density within 60 ... 1,000 g/m³.

The invention is illustrated by an exemplary embodiment of the quick-mounting structure with additional external protection, including the related mounting method, and by the relevant drawings where:
- Fig. 1 illustrates the general cutaway view of the quick-mounting structure to demonstrate a shell of a larger area, a shell of a smaller area, an outer shell and respective cavities formed in between,
- Fig. 2 illustrates the general cutaway view of the quick-mounting structure similar to that illustrated by Fig. 1 which additionally show air flow from one cavity to the other,

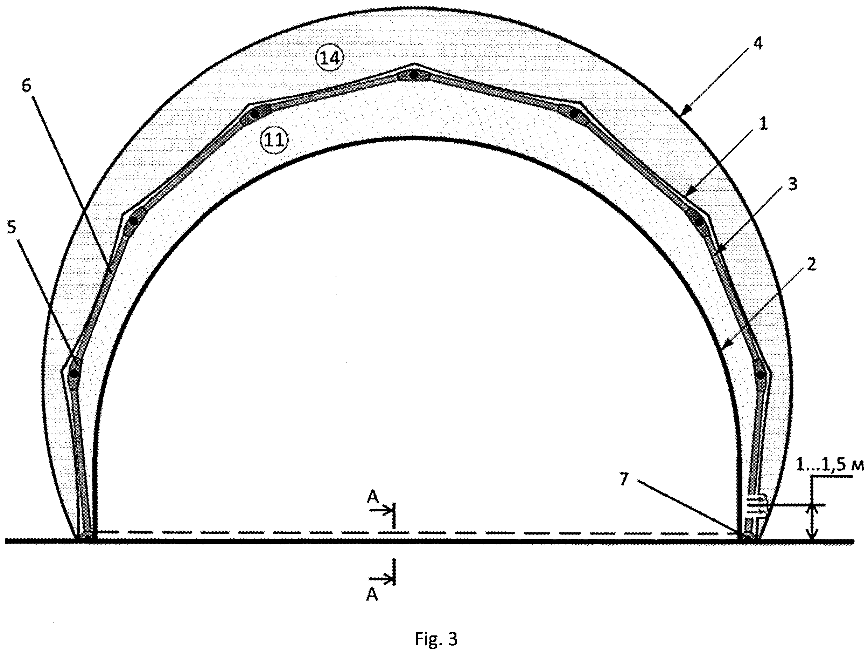

- Fig. 3 is a schematic cutaway side view of the quick-mounting structure which also shows the construction process,
- Fig. 4 is a cross-sectional view of the lower edge of the geodesic frame (A-A on Fig. 3) which shows one embodiment of the lower edge in the form of a ring element and its connection to lower parts of shells of a larger and a smaller area.

Examples and drawings provided herein are in no way intended to limit the claims appended hereto but to explain the essential features and the essence of the invention, to confirm the possibility of implementing the invention in accordance with the said features and to demonstrate other possible embodiments within the scope of the present invention, as defined by the appended claims.

The quick-mounting structure comprises at least two preferably hemispherical flexible shells: the shell of a larger area 1 and the shell of a smaller area 2, the frame 3 between the shells and the outer flexible shell 4. The frame 3 follows the shape of the shell of a larger area 1. A screen with a light-reflecting layer may be used as the shell of a smaller area 2. A geodesic frame formed by rods 5 interconnected with connecting elements 6 to form an aggregate of polygonal contours, such as triangles adjacent to each other, can be the frame 3. The surface area of such frame 3 is formed by an aggregate of areas of all those polygons. The frame 3 further comprises the lower edge 7 along the diameter of the hemisphere. The frame 3 may further comprise the ring element 8 positioned concentrically to the lower edge 7 of the frame 3 around its perimeter. In this case, the lower part of the shell of a smaller area 2 is wrapped around the ring element 8 and is attached to the lower part of the shell of a larger area 1 with a detachable connection or, alternatively, the lower part of the shell of a larger area 1 is wrapped around the ring element 8 and is attached to the lower part of the shell of a smaller area 2 with a detachable connection. The said detachable connection may be a textile fastener (Velcro) or a zip fastener (Zipper) or other similar connections allowing to quickly connect edges of flexible shells 1 and 2. The lower part of the outer shell 4 attached to the surface of the shell of a larger area 1 may be such detachable connection.

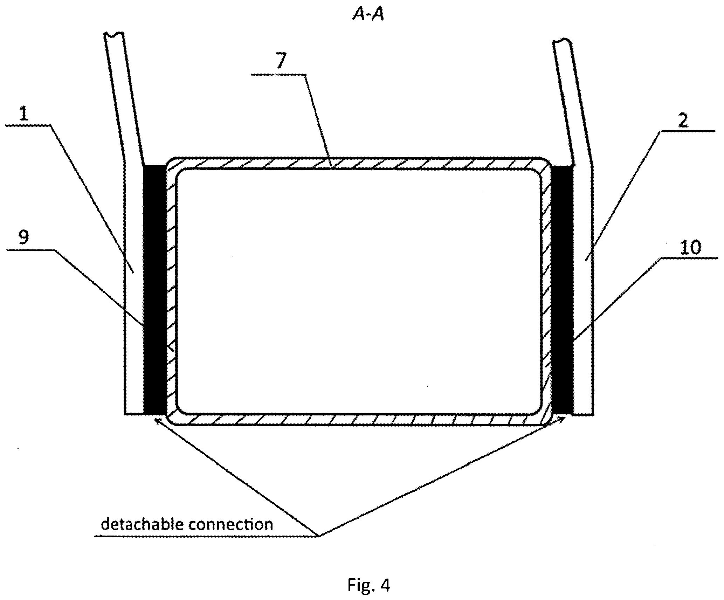

As yet another embodiment, the lower edge 7 of the frame 3 may be designed as a ring rectangular section element with outer lateral surface 9 and inner lateral surface 10 whereon detachable connection elements are fixed (Fig. 4). In this case, the lower part of the shell of a larger area 1 is attached with a detachable connection to the outer lateral surface 9, and the lower part of the shell of a smaller area 2 is attached with a detachable connection to the internal lateral surface 10.

The shell of a larger area 1 and the shell of a smaller area 2 are positioned inside one another, respectively, so that the shell of a smaller area 2 is positioned inside the shell of a larger area 1. The said shells 1 and 2 are interconnected at the bottom around the circumference of the hemisphere in the manner described above to form the cavity 11. Gas (air) rarefaction is created inside the cavity 11 by using the rarefaction means - the pump 12 with a suction opening coupled with the cavity 11. The outlet opening 13 of the pump 12 is positioned at a height within 1 ... 1.5 m from the lower edge 7 of the frame 3.

The surface of the shell of a larger area 1 is firmly coupled with the outer surface of the frame 3 under rarefaction, and the surface of the shell of a smaller area 2 is positioned at a variable distance (that is higher in azimuth of the hemisphere and reduced to its edges) from the inner surface of the frame 4 to limit the said cavity by surfaces of the shell of a larger area land the shell of a smaller area 2.

The flexible outer shell 4 is positioned on top of the said shell of a larger area 1 and is coupled with it at its bottom around the circumference of the hemisphere to form the additional cavity 14. The additional cavity 14 is limited by the outer surface of the shell of a larger area 1 and the inner surface of the outer shell 4. Air overpressure above atmospheric pressure is created inside the additional cavity 14 by the said pump 12 with outlet opening 13 coupled with the inner space of the additional cavity 14. The outer shell 4 may be made of, for example, polyurethane coated polyester with density within 60 ... 1,000 g/m³.

A difference between values of air rarefaction thus created inside the cavity 11 and overpressure in the additional cavity 14 does not exceed 20%. In particular, air rarefaction should be at least 250 Pa in the cavity 11.

The structure disclosed herein may further comprise a means gas supply to the additional cavity and/or a means of gas withdrawal from the additional cavity (not shown on figures). A pump or a set of pumps with an outlet opening coupled with the additional cavity and a suction opening positioned for air intake outside the structure may be used as the means of gas supply to the additional cavity. A pump or a valve or a set of pumps/valves coupled with the additional cavity and the space outside the structure may be used as the means of gas withdrawal from the additional cavity.

The said structure further comprise the synchronisation means to provide for gas rarefaction in the said cavity and overpressure in the additional cavity (not shown on the figures). Such synchronisation means is coupled with the rarefaction means and means for gas supply to the additional cavity and/or means for has withdrawal from the additional cavity to control these means, e.g. the synchronisation means may comprise power control means for the rarefaction means (pump 12) and means of gas supply to the additional cavity and/or means of gas withdrawal from the additional cavity, as well as a means of obtaining data on rarefaction and overpressure values, processing the data thus obtained and sending signals to control power of the rarefaction means and the means of gas supply to the additional cavity and/or gas withdrawal from the additional cavity. For this purpose, the synchronisation means may have a software and hardware unit of the relevant functionality designed to interface with the relevant control devices of the rarefaction means and the means of gas supply to the additional cavity and/or the means of gas withdrawal from the additional cavity.

An option of mounting of the quick-mounting structure disclosed herein and its subsequent use are described below.

First, the spherical geodesic frame 3 is assembled by coupling together ends of rods 5 with connecting elements 6 to form an aggregate of interconnected polygons that form hemispherical surface of the frame. The structure thus formed comprises formation of a doorway of any shape, preferably, a rectangular shape that may be achieved by using connecting elements of the corresponding design and rods of different lengths. The ring element 8 made of metal profile of any cross section is attached to the lower part of the frame 3 by e.g. welding or using appropriate connecting elements. The shell of a larger area 1 is then positioned evenly on the outer surface of the frame 3, its lower part is folded behind a ring element 8 so it could be positioned inside the frame 3 and then coupled with the lower part of the shell of a smaller area 2, which serves as a screen, using the detachable connection described above or any other connection. The shells 1 and 2 are coupled around the entire perimeter of their bottom surface. Shells may be coupled in similar manner on the outer surface of the geodesic frame 3. For this purpose, the lower part of the shell of a smaller area - screen 2 is wrapped around the ring element 8 and is attached to the lower part of the shell of a larger area 1 with a detachable connection. Alternatively, the lower edge 7 of the frame 3 may be designed as a ring rectangular section element (Fig. 4) with detachable connection elements positioned on lateral surfaces 9 and 10, such as a textile fastener (Velcro). In this case, the ring element 8 may not be installed, and lower edges of the shell of a larger area 1 and the shell of a smaller area 2, whereon the relevant parts of the said detachable connection are positioned, are connected in the similar manner with detachable connection elements on lateral surfaces 9 and 10 of the ring element of the lower edge 7. The shell of a smaller area - the screen 2 is freely positioned at the bottom of the frame 3 and lies on the surface whereon the structure is mounted to form the closed cavity 11 limited by hemispherical flexible shells of a larger area 1 and smaller area 2 and the geodesic frame 3 therebetween.

Further, the flexible outer shell 4 is positioned evenly on the surface of the shell of a larger area 1, and its lower part is attached to the outer surface of the shell of a larger area 1 at its bottom using a detachable connection similar to that described above. When all said shells 1, 2 and 4 are attached to each other, a doorway is formed which corresponds to that in the frame 3 by making openings of the respective size in all three shells 1, 2 and 4 and by fastening their ends around the perimeter of the openings with the detachable connection as described above.

The said closed cavity 11 assumes to have at least one through-hole opening to position the outlet opening 13 of the pump 12. The said opening can be made in the shell of a larger area at a height of 1 ... 1.5 m from the bottom edge of the geodesic frame. The outlet opening 13 of the pump 12 is positioned in the said opening. The pump 12 may be mounted on the frame 3 inside the cavity 11 with power supplied thereto in any known way, in particular, by using sealed terminals. In this case, the suction opening of the pump 12 is positioned inside the said cavity 11.

When the pump 12 is turned on, air is sucked from the cavity 11 between the shells of a larger area and a smaller area to put pressure below atmospheric pressure, i.e. rarefaction, in the cavity 11. When air is pumped out, the cavity 11 takes the form limited by surfaces of the shell of a larger area 1 and the shell of a smaller area 2. Under the force of rarefaction, the shell of a larger area 1 is pressed against the surface of the frame 3, and the flexible shell of a smaller area - screen 2 is incurved under the force of rarefaction and takes the shape of the hemisphere. The shape of the surface of the screen 2 and its positioning relative to the frame 3 is determined by the total area of the joint area of shells 1 and 2 thus interconnected.

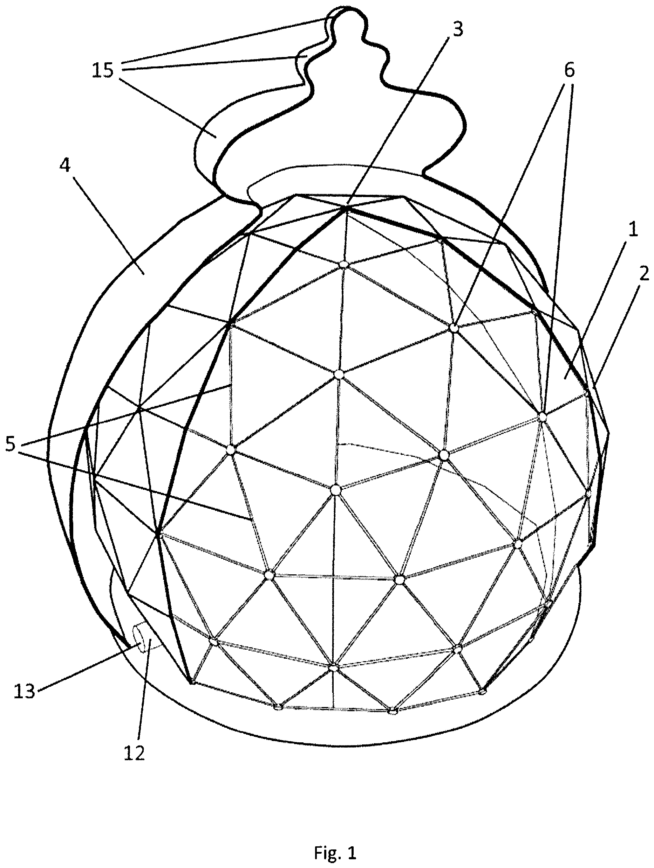

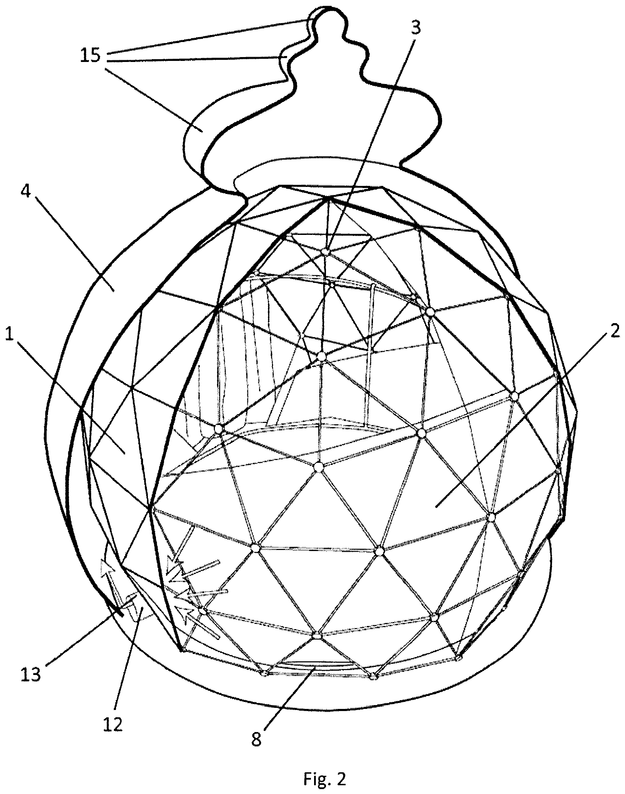

At the same time, when the pump 12 starts air suction, air is supplied to space above the geodesic frame between the outer surface of the shell of a larger area 1 and the inner surface of the outer shell 4 at a height of 1 ... 1.5 m from the bottom edge 7 of the frame 3 through the outlet opening 13 of the pump 12. Continuous air supply forms the cavity 11 between the shells of a larger area and a smaller area, as described above, to form the surface of the screen 2 and the additional cavity 14 wherein gas overpressure above atmospheric pressure is created. The outer shell 4 is inflated and, when inflated, follows the shape determined by its surface, in particular, the form with a simple geometric surface - spherical, convex elliptical, pyramid, etc., or a more complex shape formed by a combination of different surfaces such as, for example, several rotation figures to form a complex wavy surface, to form several convexities 15 positioned at a height (Fig. 1, 2), i.e. outer surface of any shape that may be related to the purpose of the building. The tensioned condition of the outer shell 4 is achieved and maintained in this position by creating overpressure inside the additional cavity 14 and interaction of elements of the system: "shell of a larger area 1 - shell of a smaller area 2 - geodesic frame 3" between each other.

When both cavities 11 and 14 are thus formed, both rarefaction inside the cavity 11 and overpressure in the additional cavity 14 are kept. For this purpose, the difference between the value of gas rarefaction inside the cavity 11 and the value of gas overpressure inside the additional cavity 14 is maintained within 20% (preferably at least 250 Pa as confirmed by tests with the structure thus designed). Empirical studies proved it necessary to ensure the force of tension of the shell of a smaller area 2 required to form the surface of the screen and keep it in this tensioned condition and, at the same time, to maintain the tension force of the outer shell 4 in the condition required to form the outer surface of the structure. Keeping rarefaction and overpressure values within these limits can be achieved only by using the said pump 12 (when the volume of the cavity 11 and the volume of the additional cavity 14 are almost the same) and by using the means of gas supply to the additional cavity and/or the means of gas withdrawal from the additional cavity (when the volume of the cavity 11 is less than the volume of the additional cavity 14). By supplying air to the additional cavity 14, the required overpressure value is kept when pressure is reduced, and by withdrawing air from the additional cavity 14, overpressure is reduced in the event of excessive increase in pressure. Using the means of gas supply to the additional cavity and/or the means of gas withdrawal from the additional cavity may be operated manually or automatically using the above hardware and software unit of the synchronisation means. In the latter case, the synchronisation means coupled with the pump 12 and the means of gas supply to the additional cavity and/or the means of gas withdrawal from the additional cavity helps to track rarefaction and overpressure values in the said cavities and to adjust, where appropriate, power or suspend or resume operation of the pump 12 and means of gas supply to the additional cavity and/or the means of gas withdrawal from the additional cavity.

The doorway thus designed can be closed by a carousel-type door or other means of similar functionality. When the structure is formed, projection equipment is positioned inside the volume limited by the screen 2 and the surface whereon the structure is mounted, for example, in the centre of the hemisphere thus obtained, and images are projected on the internal surface of the screen 2. The said hemisphere may have diameter between 1 and 50 meters.

The structure thus designed may be dismantled by stopping operation of the pump 12 and the means for gas supply to the additional cavity and/or the means for gas withdrawal from the additional cavity (if any), bringing the cavities 11 and 14 between the shells 1, 2 and 4 back to their initial state, i.e. bringing pressure in both cavities 11 and 14 to a value within the atmospheric pressure values, decoupling shells 1, 2 and 4 from one another by disengaging and removing respective detachable connections from the frame 3. The latter is dismantled by disconnecting ends of rods 5 from connecting elements 6 and the ring element 8 from the frame 3. In this state, the structure is suitable for storing or moving to another place followed by mounting as described above.

Therefore, utilisation of the invention disclosed herein, in particular, formation of the additional cavity using the outer shell and the rarefaction means which is already available in such facilities (known in the prior art) provides both external protection of the entire area of the upper surface of the structure from exposure to external environment of any nature, gives any shape to the outer surface of structure, in particular, such shape as required by the indented use of the structure, and provides extra protection of the inner cavity limited by the screen from exposure to daylight, which improves the image projection quality and reduces requirements to a material used for screen production. Adherence to the above ratio of rarefaction and overpressure created in the cavities provides increased stability of the structure and stability of operation.

Further application of the means of gas supply to the additional cavity and/or the means of gas withdrawal from the additional cavity helps to design a structure with necessary qualities at different volumes of the said cavities, requiring supplying air into or withdrawing air from the additional cavity. Regulation of this process in automatic made using the synchronisation means, its elements and connection with other elements of the design simplifies the use of the structure. Using the geodesic frame, in particular, the frame formed as described above, helps to simplify achieving the hemispherical shape of the frame, and further enhances its stability and strength. Coupling of the shells with each other as described above helps to simplify mounting and dismantling of the structure and formation of both cavities required to form the screen and the outer surface of the structure.

On the other hand, such embodiments of coupling the shells with each other have a certain drawback as the shell of a larger area or the shell of a smaller area (depending on the embodiments described above) can be damaged in a point where it is folded behind the ring element due to friction when it comes in contact with the surface whereon the construction is installed when the structure is to be moved on this surface. To eliminate this drawback, according to one embodiment of the frame design, the lower edge of the frame is designed as a ring rectangular section element with lateral sides whereon lower parts of shells of a larger and a smaller area are fixed using a detachable connection to avoid the need to arrange the surface of shells on the bottom surface of the ring element and violation of integrity of this surface of shells at friction.

Positioning of the pump outlet opening at a height within 1 ... 1.5 m from the bottom edge of the geodesic frame helps to form empty volume inside the additional cavity opposite the outlet opening that is required for gas (air) release and uniform distribution throughout the entire volume of the additional cavity. An embodiment of the outer shell using polyurethane coated polyester with density within 60 ... 1,000 g/m³ helps to enhance the strength of the outer shell so that it could withstand the required force of tension created by overpressure inside the additional cavity and allows the shell to achieve the required weight characteristics.

## Claims

1. A domed screen structure with additional external protection comprising at least two preferably hemispherical flexible shells: the shell of a larger area (1) and a screen with a light-reflecting layer that used as the shell of a smaller area (2), positioned one inside the other, respectively, and interconnected at the bottom around the circumference of the hemisphere to form a cavity (11) wherein a frame (3) that follows the shape of the shell of a larger area (1) is positioned, and gas rarefaction is created in the said cavity (11) by a rarefaction means with a suction opening coupled with the said cavity (11), and the surface of the shell of a larger area (1) under rarefaction is tightly coupled with the outer surface of the frame (3), and the surface of the screen under rarefaction is positioned at a distance from the inner surface of the frame (3) to limit the said cavity (11) by surfaces of the shell of a larger area (1) and the screen, wherein further comprising a flexible outer shell (4) positioned on top of the said shell of a larger area (1) and connected to it at the bottom around the circumference of the hemisphere to form an additional cavity (14) limited by the outer surface of the shell of a larger area (1) and the inner surface of the outer shell,
***characterized in***
**that** the gas overpressure above atmospheric pressure is created inside the additional cavity (14) by the said rarefaction means with an outlet opening (13) coupled with the inner space of the additional cavity (14) and positioned at a height within 1...1.5 m from the lower edge (7) of the frame (3), and the difference between overpressure value in the additional cavity (14) and gas rarefaction value in the cavity (11) between the shell of a larger area (1) and the screen does not exceed 20% and further comprising a synchronisation means to create gas rarefaction in the said cavity (11) and to create overpressure in the additional cavity (14) coupled with the rarefaction means and a means for gas supply to the additional cavity (14) and/or a means for gas withdrawal from the additional cavity (14) and the said synchronization means comprises a power control means for the rarefaction means and the means for gas supply to the additional cavity (14) and/or the means for gas withdrawal from the additional cavity (14).

2. The structure of claim1 wherein air is used as gas.

3. The structure of claim 2 wherein air rarefaction of at least 250 Pa is created in the cavity (11) between the shell of a larger area (1) and the screen.

4. The structure of claim 1 wherein the frame (3) is a geodesic frame which surface area is formed by areas of polygonal contours adjacent to each other and which comprises a lower edge (7) along the diameter of the hemisphere is used as a frame (3).

5. The structure of claim 4 wherein the geodesic frame (3) is formed by rods (5) interconnected by connecting elements (6) to form an aggregate of polygonal contours adjacent to each other.

6. The structure of claim 4 wherein the geodesic frame (3) comprises a ring element (8) positioned concentrically to a bottom edge of the frame (3) around its perimeter, the lower part of the shell of the screen is wrapped around the ring element (8) and is attached to the lower part of the shell of a larger area (1) with a detachable connection.

7. The structure of claim 4 wherein the geodesic frame (3) comprises a ring element (8) positioned concentrically to a bottom edge of the frame (3) around its perimeter, the lower part of the shell of a larger area (1) is wrapped around the ring element (8) and is attached to the lower part of the shell of the screen with a detachable connection.

8. The structure of claim 4 wherein the lower edge (7) of the geodesic frame (3) is designed as a rectangular cross-section ring element (8) to form the outer and inner lateral surfaces (10) of the ring element (8), and the outer lateral surface (9) of the ring element (8) is connected by a detachable connection with the lower part of the shell of a larger area (1), and the inner lateral surface (10) the ring element (8) is connected by a detachable connection with the lower part of the shell of the screen.

9. The structure of claims 6 to 8 wherein the outer shell is attached to the shell of a larger area (1) by a detachable connection.

10. The structure of claim 1 wherein a pump (12) is used as a rarefaction means.

11. The structure of claim 1 wherein an outer shell is made of polyurethane coated polyester or polyvinylchloride with density within 60 ... 1,000 g/m³.

## Patentansprüche

1. Gewölbte Schirmstruktur mit zusätzlichem Außenschutz, die mindestens zwei vorzugsweise halbkugelige, flexible Schalen umfasst, nämlich eine areal größere Schale (1) und einen Schirm mit einer licht-reflektierenden Schicht, der als ein areal kleinere Schale (2) bereitgestellt ist,
wobei die Schalen ineinander positioniert sind und unten um den Umfang der Halbkugel herum mit einander verbunden sind und einen Hohlraum (11) bilden, worin ein der Form der areal größeren Schale (1) folgendes Gerüst (3) positioniert ist,
wobei in dem Hohlraum (11), eine Gasrarefizierung durch ein Rarefizierungsmittel, das eine mit dem Hohlraum (11) verbundenen Ansaugöffnung aufweist, geschaffen ist,
und bei der Rarefizierung die Oberfläche der areal größeren Schale (1) mit der äußeren Fläche des Gerüsts (3) fest verbunden wird,
und die Oberfläche des Schirms bei Rarefizierung von der inneren Fläche des Gerüsts (3) distanziert positioniert ist, um den besagten Hohlraum (11) durch Flächen der areal größeren Schale (1) und des Schirms zu begrenzen,
weiter eine flexible Außenschale (4) aufweisend, die oben auf der besagten areal größeren Schale (1) positioniert ist und die mit besagter areal größeren Schale (1) unten um den Umfang des Halbkugels herum verbunden ist, um einen zusätzlichen Hohlraum (14), die durch die äußeren Fläche der areal größeren Schale (1) und durch die innere Fläche der äußeren Schale begrenzt ist, zu bilden,
***dadurch gekennzeichnet,***
**dass** ein Gasüberdruck, der höher als Atmosphärendruck ist, innerhalb des zusätzlichen Hohlraums (14) durch besagter Rarefizierungsmittel mit einer Ausflussöffnung (13) geschaffen ist, die mit der Innenraum des zusätzlichen Hohlraums (14) verbunden ist und die in einer Höhe, die 1 m bis 1.5 m weg von dem unteren Rand (7) des Gerüsts (3) ist, positioniert ist,
und **dass** der Unterschied zwischen dem Überdruckwert in dem zusätzlichen Hohlraum (14) und dem Gasrarefizierungswert in dem Hohlraum (11) zwischen der areal größeren Schale (1) und dem Schirm nicht mehr als 20% ist,
und **dass** weiter ein Synchronisierungsmittel vorgesehen ist, um Gasrarefizierung im besagtem Hohlraum (11) zu schaffen, und um einen Überdruck in dem zusätzlichen Hohlraum (14) zu schaffen, die über das Rarefizierunsmittel und Mittel zur Gaslieferung von dem zusätzlichen Hohlraum (14) und/oder Mittel zur Gasentnahme von dem zusätzlichen Hohlraum (14), mit dem Hohlraum (11) verbunden ist
und **dass** das besagte Synchronisationsmittel folgendes ausweist: ein Leistungssteuerungsmittel für das Rarefizierungsmittel und das Mittel zum Gaslieferung an den zusätzlichen Hohlraum (14) und/oder das Mittel zum Gasentnahme von dem zusätzlichen Hohlraum (14).

2. Struktur nach Anspruch 1, wobei Luft als Gas benutzt ist.

3. Struktur nach Anspruch 2, wobei Luftrarefizierung mit wenigstens 250 Pa in dem Hohlraum (11) zwischen der areal größeren Schale (1) und dem Schirm geschaffen ist.

4. Struktur nach Anspruch 1, wobei ein geodätisches Gerüst (3), dessen Oberfläche durch zueinander benachbarte Flächen mit polygonalen Umrissen, gebildet ist und welches Gerüst einen unteren Rand (7) als ein Gerüst (3) aufweist, der dem Durchmesser der Halbkugel entlang liegt.

5. Struktur nach Anspruch 4, wobei das geodätische Gerüst (3) durch Verbindungselemente miteinander verbundene Stangen (5), gebildet ist, um ein Aggregat polygonaleren Umrissen nebeneinander zu gestalten.

6. Struktur nach Anspruch 4, wobei das geodätische Gerüst (3) ein Ringelement (8), positioniert konzentrisch mit einem unteren Rand des Gerüst (3), um dessen Perimeter herum, umfasst, wobei das Unterteil der Schale des Schirms um das Ringelement (8) ummantelt ist und mit einer abnehmbaren Verbindung an dem Unterteil der areal größere Schale (1) angehängt ist.

7. Struktur nach Anspruch 4, wobei das geodätische Gerüst (3) ein Ringelement (8), positioniert konzentrisch mit einem unteren Rand des Gerüsts (3) entlang dessen Perimeter umfasst, und das Unterteil der areal größeren Schale (1) des Schirms um das Ringelement (8) gewickelt ist und mit dem Unterteil der areal größeren Schale (1) mit einer abnehmbaren Verbindung angeschlossen ist.

8. Struktur nach Anspruch 4, wobei der untere Rand (7) des geodätische Gerüsts (3) ist als ein Ringelement (8) mit einer Rechteckquerschnitt entworfen, um die äußeren und inneren Lateralflächen (10) des Ringelements (8) zu gestalten, und die äußere laterale Oberfläche (9) des Ringelements (8) ist mit einer abnehmbaren Verbindung mit dem Unterteil der areal größeren Schale (1) verbunden, und die innere Lateralfläche (10) des Ringelements (8) ist mit einer abnehmbaren Verbindung mit dem Unterteil der Schale des Schirms verbunden.

9. Struktur nach den Ansprüchen 6 bis 8, wobei die äußere Schale an die areal größere Schale (1) mit einer abnehmbare Verbindung befestigt ist.

10. Struktur nach Anspruch 1, wobei eine Pumpe (12) als ein Rarefizierungsmittel benutzt ist.

11. Struktur nach Anspruch 1, wobei eine äußere Schale aus Polyurethanummanteltes Polyester oder Polyvinylchlorid mit einer Dichte zwischen 60 ... 1,000 g/m3 hergestellt ist.

## Revendications

1. Structure d'écran bombée avec une protection extérieure supplémentaire comportant au minimum et préférablement deux coquilles hémisphériques flexibles, en l'occurrence une grande coquille-zone (1) et un écran avec une couche reflétant la lumière disposée comme une petite coquille-zone,
Où les coquilles sont positionnées inextricablement et reliées en bas autour de la périphérie de l'hémisphère et forment une cavité (11) où l'échafaudage suivant (3) est positionné dans la forme de la grande coquille-zone (1)
Où une raréfaction gazière se produit dans la cavité (11) par le biais d'un moyen de raréfaction présentant une ouverture d'aspiration reliée à la cavité (11) et la superficie de la grande coquille-zone (1) lors de la raréfaction est reliée d'une manière fixe à la surface extérieure de l'échafaudage (3) et la superficie de l'écran lors de la raréfaction est positionnée à titre détachée de la surface intérieure de l'échafaudage (3) pour distancier la dit cavité (11) à travers les surfaces de la grande coquille-zone (1) et l'écran, présentant par ailleurs une coquille extérieure flexible (4) qui est positionnée en haut sur la dit grande coquille-zone (1) et qui est reliée à la dit grande coquille-zone (1) en bas autour de la périphérie de l'hémisphère pour former une cavité supplémentaire (14) limitée par la surface extérieure de la grande coquille-zone (1) *et par la surface intérieure de la coquille extérieure,*
*Est caractérisée de sorte qu'*
une suppression gazière, plus forte que la pression atmosphérique, est formée à l'intérieur de la cavité supplémentaire (14) par la biais du dit moyen de raréfaction avec un orifice d'écoulement (13) relié à l'espace intérieur de la cavité supplémentaire (14) se positionnant sur une hauteur de 1 m jusqu'à 1.5 m du bord inférieure (7) de l'échafaudage et que la différence entre la valeur de dépression dans la cavité supplémentaire (14) et la valeur de la raréfaction gazière dans la cavité (11) entre la grande coquille-zone (1) et l'écran ne dépasse pas 20% et que par ailleurs un moyen de synchronisation est prévu pour former la raréfaction gazière dans la dit cavité (11) et pour susciter une suppression dans la cavité supplémentaire (14) qui est reliée par le biais du moyen de raréfaction et par le biais du moyen de fourniture de gaz de la cavité supplémentaire (14) et/ou par le biais d'un moyen de prélèvement gazier de la cavité supplémentaire (14) à la cavité (11) et que le moyen de synchronisation présente ce qui suit : un moyen de contrôle d'alimentation pour le moyen de raréfaction et le moyen pour la fourniture gazière à la cavité supplémentaire (14) et/ou le moyen de prélèvement gazier de la cavité supplémentaire (14).

2. Structure selon la revendication 1 où l'air est utilisé sous forme de gaz.

3. Structure selon la revendication 2 où la raréfaction de l'air est formée avec un minimum de 250 Pain de la cavité (11) entre la grande coquille-zone et l'écran.

4. Structure selon la revendication 1 où un échafaudage géodésique (3) dont la surface est formée par des plages avoisinantes les unes aux autres avec des lignes polygonales et qui présente des éléments d'échafaudage au bord inférieure (7) sous forme d'échafaudage (3) se situant tout au long du diamètre de l'hémisphère.

5. Structure selon la revendication 4 où l'échafaudage géodésique (3) est formé par le biais d'éléments de liaison par des tiges reliées entre elles (5) pour façonner un agrégat de lignes polygonales l'une à côté de l'autre.

6. Structure selon la revendication 4 où l'échafaudage géodésique (3) comporte un élément annulaire (8), se positionnant concentriquement sur le bord inférieure de l'échafaudage (3) autour de son périmètre où la partie inférieure de la coquille de l'écran est enveloppé par l'élément annulaire (8) et est entouré par le biais d'une liaison amovible à la partie inférieure de la grande coquille-zone (1).

7. Structure selon la revendication 4 où l'échafaudage géodésique (3) comporte un élément annulaire (8), se positionnant concentriquement sur le bord inférieure de l'échafaudage (3) autour de son périmètre, tandis que la partie inférieure de la grande coquille-zone (1) de l'écran est enroulé autour de l'élément annulaire (8) et est raccordé à la partie inférieure de la grande coquille-zone (1) par le biais d'une liaison amovible.

8. Structure selon la revendication 4 où le bord inférieure (7) de l'échafaudage géodésique (3) est conçu sous forme d'un élément annulaire (8) avec une section rectangulaire pour façonner les surfaces latérales extérieures et intérieures (10) de l'élément annulaire (8) et que la surface latérale extérieure (9) de l'élément annulaire (8) est reliée par le biais d'une liaison amovible à la partie inférieure de la grande coquille-zone (1) et que la surface latérale intérieure (10) de l'élément annulaire (8) est reliée grâce à une liaison amovible à la partie inférieure de la coquille de l'écran.

9. Structure selon les revendications 6 jusqu'à 8 où la coquille extérieure est fixée à la grande coquille-zone (1) grâce à une liaison amovible.

10. Structure selon la revendication 1 où une pompe (12) est utilisée en qualité de moyen de raréfaction.

11. Structure selon la revendication 1 où une coquille extérieure est produite de polyuréthane-de polyptère enrobé ou de chlorure de polyvinyle d'une densité se situant entre 60 ... 1,000 g/m³.
